# EUROPEAN PATENT SPECIFICATION

(11) **EP 2 845 720 B1**
(45) Date of publication and mention of the grant of the patent: **25.01.2017**
(21) Application number: 14182213.0
(22) Date of filing: 26.08.2014
(51) Int. Cl.: B29D 30/24

(54) **Tire building drum and method of building a tire**
Trommel und Verfahren zur Reifenerzeugung
Tambour servant à fabriquer des pneus et procédé de fabrication de pneu

(30) Priority: 29.08.2013 US 201361871623 P; 29.08.2013 US 201361871604 P
(43) Date of publication of application: 11.03.2015
(73) Proprietor: The Goodyear Tire & Rubber Company, Akron, Ohio 44316 (US)
(72) Inventor: Stoila, George Michael, Tallmadge, OH 44278 (US); Baldoni, Viscardo, 38068 Rovereto (TN) (IT); Royer, Thierry, B-6700 Frassem (BE); Wells, Dale Eugene, Massillon, OH 44646 (US); Sells, Thomas Alan, Topeka, KS 66618 (US); Yao, Minwu, Hudson, OH 44236 (US)
(74) Representative: Kutsch, Bernd

(56) References cited:
- EP-A1- 0 544 154
- EP-A1- 2 572 872
- WO-A1-01/08874
- WO-A1-2009/128103
- US-A- 3 536 566
- US-A- 5 354 405

## Description

### Field of the Invention

The invention relates to tire building and more particularly to a tire building drum and a method of building a tire adapted for large off-the-road tires such as tires having a rim size of 57 inches (144.78 cm) or more.

### Background of the Invention

The manufacture of tires, particularly large tires, involves many steps. For very large tires having a size R 57 inch or larger, the manufacturing process typically involved the making of a "band" on a band builder machine. A band typically includes a liner, squeegee, insert and ply. After the band was made, it was typically removed from the band builder machine and stored on a rack. One problem with band storage is that the band typically shrinks. In order to overcome this problem, the stored band was transported to a band expander, wherein the band was expanded and then installed on a first stage drum. The first stage drum would then process the band by adding the beads onto the green carcass. The carcass would then be removed, and transferred to a second stage drum. The second stage drum would then shape the carcass, apply the belts and then apply the tread. The prior art process thus requires multiple building stages and the transfer of the components from machine to machine. Thus a full stage tire building drum is desired which solves the inefficiencies as described above. This requires that the tire building drum be capable of axial expansion and contraction as well as radial expansion/contraction. Further, it is important to maintain a positive bead lock during the entire tire building process, including the tire shaping, so that the ply cord length is maintained, resulting in good tire uniformity.

US-A-5,354,405 describes a tire building drum having an inboard section, a center section and an outboard section, wherein the inboard section has a rotating spindle and a sliding shaft rotationally coupled to the spindle, wherein the inboard section is axially fixed and has a radially expandable bead lock device mounted on the spindle, and wherein the center section has a hub affixed to the sliding shaft, the hub having one or more pinion gears for engaging a fixed rack and a moving rack. The sliding shaft is slidable within the spindle and the moving rack is located inside of the sliding shaft.

WO-A-2009/128103 describes a process and an apparatus for building tire. The apparatus comprises auxiliary support members that are brought into engagement with a tire building drum. A separation element having a circumferential support surface is provided at a radially external position on each of the auxiliary support members. A component of the tire is applied around each of the circumferential support surfaces and the auxiliary support members are subsequently axially moved away from the building drum so as to radially contract the circumferential support surfaces to decouple them from the respective components of the tire.

### Summary of the Invention

The invention relates to a tire building drum in accordance with claim 1 and 6 respectively and to a method of building a tire in accordance with claim 11.

Dependent claims refer to preferred embodiments of the invention.

In one aspect of the invention, a method of building a tire on a tire building drum is disclosed, the method comprising the steps of: applying one or more tire building components onto a drum to form a tire carcass having carcass ends, the drum having an inboard section, a center section and an outboard section, the inboard section having a rotating spindle and a sliding shaft, wherein the sliding shaft is slidable within the spindle, wherein the inboard section has a radially expandable bead lock mounted on the spindle, said center section mounted to a hub, wherein the hub is mounted on the sliding shaft, said center section having a plurality of tiles mounted thereon that are radially expandable, wherein the outboard section of the drum is mounted on a distal end of the sliding shaft, wherein the outboard section further has a radially expandable bead lock, wherein the center section and the outboard section are axially movable by sliding of the sliding shaft; placing a first and second bead around the tire carcass on the drum so that the carcass ends of the tire carcass extend laterally outward of the beads; radially expanding the first and second bead locks into engagement with the first and second bead; expanding the carcass located between the bead locks radially outward by radially expanding a center section of the tire building drum while moving only the bead lock on the outboard section axially inward towards the inboard section.

In a preferred aspect of the invention, the radial movements of the bead locks are independent of the radial movement of the center section.

In another preferred aspect of the invention, the bead lock is connected to a link lever located between the bead lock and the center section tiles.

In yet another preferred aspect of the invention, the radial movement of the center section is independent of the axial movement of the drum.

In yet another preferred aspect of the invention, the first and second bead locks are independently actuated with respect to each other.

In yet another preferred aspect of the invention, the step of axially moving the center section is by rotating one or more pinion gears, said pinion gear mounted to engage a moving rack affixed to the sliding shaft and a fixed rack mounted to the spindle, so that rotation of the one or more pinion gears slides the hub in an axial direction.

In yet another preferred aspect of the invention, the center section of the drum is axially movable by rotating a pinion gear mounted between a hub affixed to the center section and the sliding shaft, wherein the pinion gears engage a fixed rack connected to the inboard section, wherein rotation of the pinion gears axially slide the hub inboard and outboard in an axial direction.

In yet another preferred aspect of the invention, the inboard section is axially fixed in location.

According to claim 11 of the invention, the method comprises the steps of: applying one or more tire building components onto a drum to form a tire carcass having carcass ends, the drum having an inboard section, a center section and an outboard section, the inboard section having a rotating spindle and a sliding shaft, wherein the sliding shaft is slidable within the spindle, wherein the inboard section has a radially expandable bead lock within the drum half mounted on the spindle, said center section having a hub mounted on the sliding shaft and further comprising a plurality of tiles that are radially expandable, wherein the outboard section of the drum is mounted on a distal end of the sliding shaft, wherein the outboard section further has a radially expandable bead lock within the drum half; wherein the outboard section is axially movable by sliding of the sliding shaft; placing a first and second bead around the tire carcass on the drum so that the carcass ends of the tire carcass extend laterally outward of the beads; radially expanding the first and second bead locks into engagement with the first and second bead; expanding the carcass located between the bead locks radially outward by radially expanding a center section of the tire building drum while moving the crowning levers and while moving drum half which contains the bead lock on the outboard section axially inward towards the inboard section, wherein the step of moving the drum half which contains the bead lock axially inward occurs by rotating a pinion gear mounted in a hub affixed to the center section and the sliding shaft, while said pinion gear engages a moving rack inside the sliding shaft and affixed to the outboard section, so that rotation of the pinion gear slides the moving rack and the outboard section in an axial direction.

In a preferred aspect of the invention, the method further comprises the step of axially moving the center section of the drum by axial movement of the hub.

In a preferred aspect of the invention, one or more pinion gears are mounted between the hub a and the sliding shaft, wherein the one or more pinion gears are positioned to engage a fixed rack connected to the spindle, and a moving rack connected to the sliding shaft, wherein axial movement of the sliding shaft rotates the one or more pinion gears so that the hub slides axially.

In a preferred aspect of the invention, the fixed rack is connected to the spindle.

In a preferred aspect of the invention, the fixed rack is located between the hub and the sliding shaft.

In a preferred aspect of the invention, the axial travel of the outboard section of the drum is greater than the axial travel of the center section for a single rotation of the pinion gears.

In a preferred aspect of the invention, the axial travel of the outboard section of the drum is twice as great as the axial travel of the center section for a single rotation of the pinion gears.

In yet another aspect of the invention, a tire building drum is disclosed, the tire building drum comprising: an inboard section, a center section and an outboard section, the inboard section having a rotating spindle and a sliding shaft, wherein the sliding shaft is slidable within the spindle, wherein the inboard section has a radially expandable bead lock device mounted on the spindle, said center section having an internal hub mounted on the sliding shaft and further comprising a plurality of tiles that are radially expandable, wherein the outboard section of the drum is mounted on a distal end of the sliding shaft, wherein the outboard section further has a radially expandable bead lock device, and wherein the center section and the outboard section is axially movable by sliding of the sliding shaft.

In a preferred aspect of the invention, the sliding shaft is rotationally coupled to the spindle. In a preferred aspect of the invention, the inboard section is axially fixed.

In a preferred aspect of the invention, the radially expandable bead lock devices are axially movable.

In a preferred aspect of the invention, the inboard section and the outboard section each comprise a plurality of telescoping tiles.

In a preferred aspect of the invention, each telescoping tile is radially expandable.

In a preferred aspect of the invention, each telescoping tile has a fixed portion and an axially extending portion.

In a preferred aspect of the invention, the axially extending portion of the telescoping tiles overlap with a corresponding tile mounted on the center section.

In a preferred aspect of the invention, each bead lock device is connected to a first end of a link lever, and wherein the second end of the link lever is connected to a distal end of a telescoping tile.

In a preferred aspect of the invention, each bead lock device is axially movable.

In a preferred aspect of the invention, each bead lock device is axially movable by the radial expansion of the telescoping tiles.

In a preferred aspect of the invention, the center section hub has one or more pinion gears for engaging a fixed rack and a moving rack, wherein the moving rack is located inside of the sliding shaft, and the fixed rack is located outside the moving rack, wherein rotation of the pinion gears axially slide the shaft inboard and outboard.

In a preferred aspect of the invention, the fixed rack is connected to the spindle.

In a preferred aspect of the invention, the inboard section and the outboard section each comprise a plurality of telescoping tiles.

According to claim 1 of the invention, the tire building drum comprises:
an inboard section, a center section and an outboard section, the inboard section having a rotating spindle and a sliding shaft, wherein the sliding shaft is slidable within the spindle and rotationally coupled to the spindle, wherein the inboard section is axially fixed, wherein the inboard section has a radially expandable bead lock device mounted on the spindle, said center section having a hub affixed to the sliding shaft, wherein the hub has one or more pinion gears for engaging a fixed rack and a moving rack, wherein the moving rack is located inside of the sliding shaft, and wherein rotation of the pinion gears axially slide the shaft inboard and outboard.

According of the claim 1, the fixed rack is connected to the spindle.

In a preferred aspect of the invention, the fixed rack is located between the hub and the sliding shaft.

In a preferred aspect of the invention, the axial travel of the outboard section of the drum is greater than the axial travel of the center section for a single rotation of the pinion gears.

In a preferred aspect of the invention, the axial travel of the outboard section of the drum is twice as great as the axial travel of the center section for a single rotation of the pinion gears.

In a preferred aspect of the invention, the axial travel of the outboard section of the drum is 1.5 times as great as the axial travel of the center section for a single rotation of the pinion gears.

In a preferred aspect of the invention, the inboard section and the outboard section each comprise a plurality of telescoping tiles.

In a preferred aspect of the invention, each telescoping tile is radially expandable.

In a preferred aspect of the invention, each telescoping tile has a fixed portion and an axially extending portion.

In a preferred aspect of the invention, the axially extending portion of the telescoping tiles overlap with a corresponding tile mounted on the center section.

According to claim 6 of the invention, the tire building drum comprises:
an inboard section, a center section and an outboard section, the inboard section having a rotating spindle and a sliding shaft, wherein the sliding shaft is slidable within the spindle and rotationally coupled to the spindle, wherein the inboard section is axially fixed, wherein the inboard section and the outboard section each have a fixed tile deck and a telescoping tile deck, said center section being mounted on the sliding shaft and further comprising a center deck having a plurality of radially expandable tiles, wherein the outboard section of the drum is mounted on a distal end of the sliding shaft, wherein the drum is axially movable by sliding of the sliding shaft, wherein the center section tile deck has the largest diameter, and wherein each telescoping tile deck has a diameter less than the diameter of the center section tile deck.

In a preferred aspect of the invention, the fixed tile deck has a diameter less than the telescoping tile deck diameter.

In a preferred aspect of the invention, the link levers are adjustable from 0 to 30 degrees.

In a preferred aspect of the invention, any of tire building drum disclosed above may comprise a sealing membrane, wherein the sealing membrane has a first end mounted on the bead saddle of a bead lock, and a second end mounted on an interior portion of the drum, wherein the sealing membrane has an expansion portion.

In a preferred aspect of the invention, the expansion portion is made of steel.

In a preferred aspect of the invention, the expansion portion has one or more folds.

In a preferred aspect of the invention, any of tire building drum disclosed above may further comprise a climbing bladder, wherein the climbing bladder has a first end mounted on the bead saddle of the bead lock, and a second end mounted to a support beam.

In a preferred aspect of the invention, the support beam is pivotable about its end, and is made of reinforced rubber.

In a preferred aspect of the invention, an inflatable pusher engages the support beam when inflated, causing the support beam to pivot about its second end, raising the second end of the climbing bladder radially outward.

In a preferred aspect of the invention, the climbing bladder is replaced with a mechanical deck.

### Definitions

For ease of understanding this disclosure, the following items are defined:
"Axial" and "axially" means the lines or directions that are parallel or aligned with the longitudinal axis of rotation of the tire building drum.
"Bead" means that part of the tire comprising an annular tensile member commonly referred to as a "bead core" wrapped by ply cords and shaped, with or without other reinforcement elements such as flippers, chippers, apexes, toe guards and chafers, to fit the design rim.
"Carcass" means an unvulcanized laminate of tire ply material and other tire components cut to length suitable for splicing, or already spliced, into a cylindrical or toroidal shape. Additional components may be added to the carcass prior to its being vulcanized to create the molded tire.
"Circumferential" means lines or directions extending along the perimeter of the surface of the annular tread perpendicular to the axial direction.
"Equatorial Plane (EP)" means the plane perpendicular to the tire's axis of rotation and passing through the center of its tread.
"Radial" and "radially" mean directions radially toward or away from the axis of rotation of the tire building drum.

### Brief Description of the Drawings

The invention will be described by way of example and with reference to the accompanying drawings in which:
Figure 1 illustrates a front cross-sectional view of a tire building drum of the present invention shown in an axially expanded form;

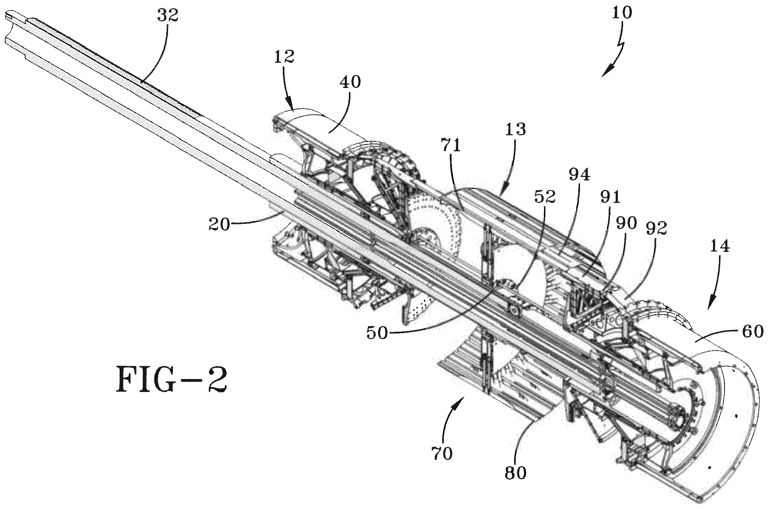

Figure 2 illustrates a perspective cross-sectional view of the tire building drum of Figure 1;
Figures 3-6 illustrate the tie building drum in various positions for building a tire;
Figure 7 is a side view of a sliding shaft shown in the expanded position;
Figure 8 is a side view of the sliding shaft shown in the axially contracted position;
Figure 9 is a perspective view of the sliding shaft;
Figure 10 is an end view of the sliding shaft of Figure 9;
Figure 11 is a cross-sectional side view of the sliding shaft;
Figure 12 is a cross-sectional view in the direction 12-12 of Figure 8;
Figure 13 is a close up view of the encircled region of Figure 11 illustrating the pinion and rack assemblies;
Figure 14 is a cross-sectional view of the outboard end of the drum shown with the bead mechanism and the tiles shown in the expanded forms in phantom;

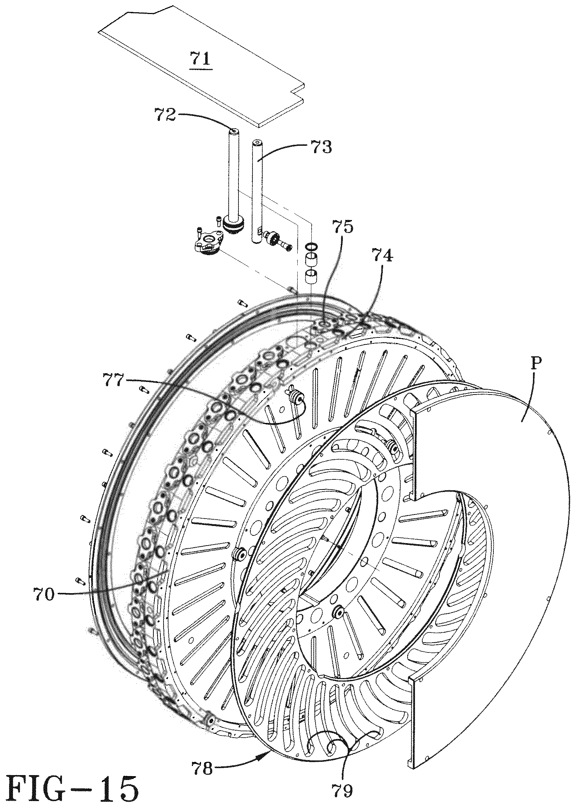

Figures 15 illustrates an exploded perspective view of the center deck actuator mechanism;

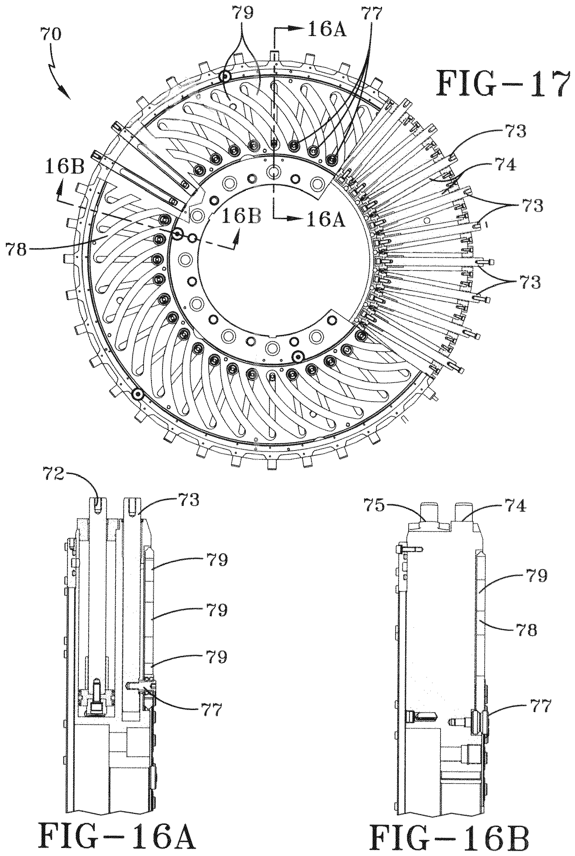

Figure 16a is a side view of the center deck mechanism of Figure 17 in the direction 16a-16a;
Figure 16b is a side view of the center deck mechanism of Figure 17 in the direction 16b-16b;
Figure 17 is a side view of the outboard end of the center deck mechanism of Figure 15;
Figure 18 is a close up view of the bead lock of the present invention;

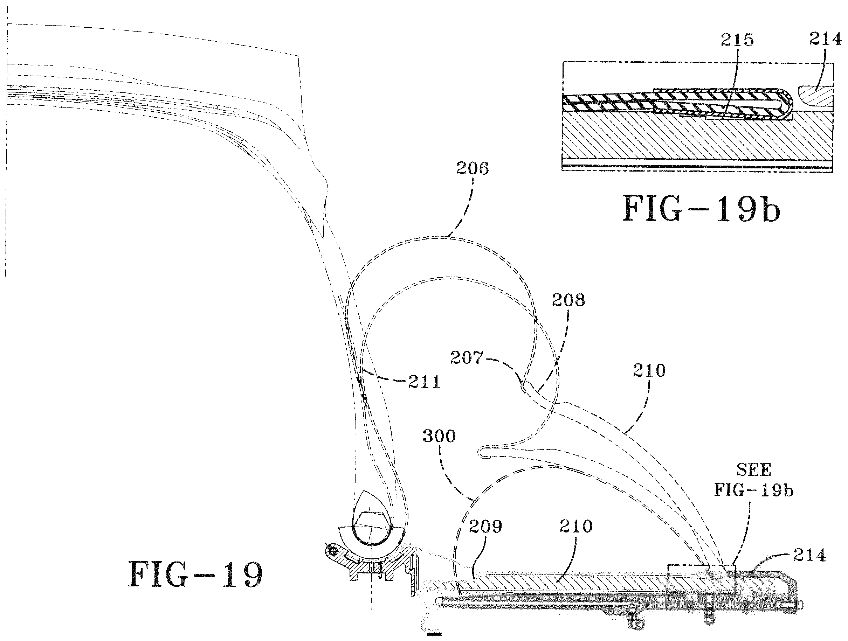

Figure 19 is a close up view of the bead lock and bladder assembly, with the bladder assembly shown in the actuated state;
Figure 19a is a close up view of the bubble of Figure 19;
Figure 20 is a second embodiment of a bladder assembly;
Figure 21 a is an exploded view of a seal for a bead lock mechanism of Figure 21 b;
Figure 21b is a second embodiment of a bead lock assembly;
Figure 22a is a third embodiment of a seal for the bead lock mechanism of Figure 22b;
Figure 22b is a third embodiment of a bead lock assembly; and
Figure 22c is the contour of the bead saddle.

### Detailed Description of Example Embodiments of the Invention

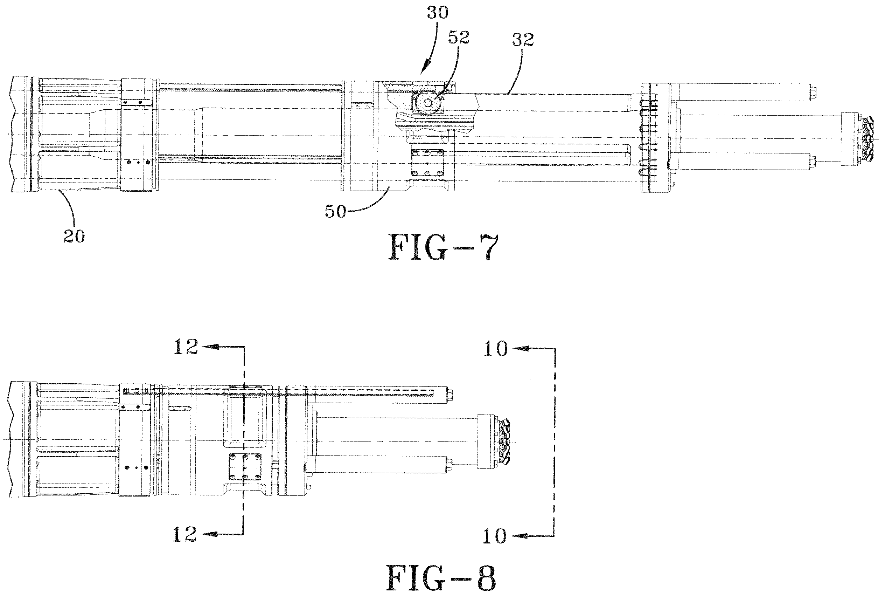

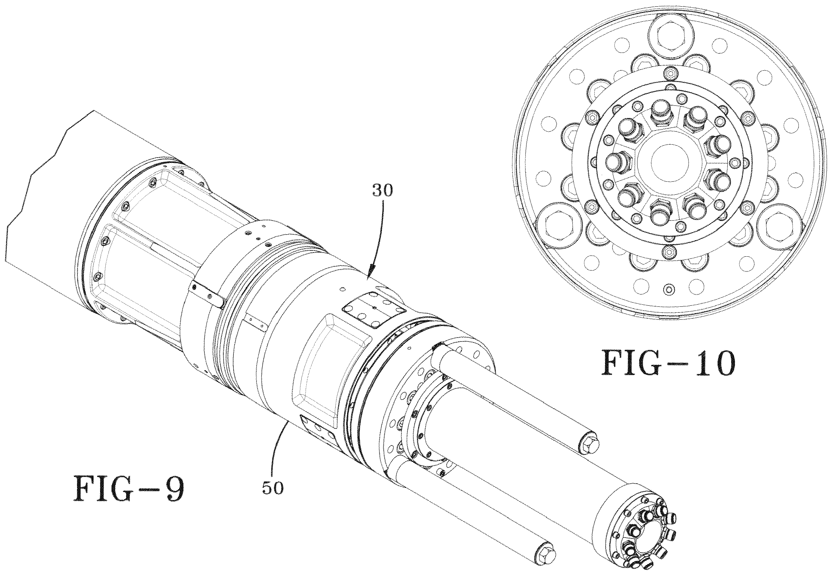

With reference to the Figures, a full stage tire building drum 10 of the present invention is illustrated. The drum 10 has an inboard section 12 that is axially fixed, and an axially movable center section 13 and an outboard section 14 which axially moves towards and away from the inboard section 12 in order to expand and contract the drum. These three sections 12, 13, 14 are mounted on an internal support assembly 30 which allow rotation and axial movement of the drum sections. The internal support assembly 30 as shown in Figures 7-9, include a rotating spindle 20, a center deck hub 50, and a sliding shaft 32. The internal support assembly 30 has internal mechanisms to adjust the centerline as the drum is axially expanded and contracted. All of these sections are explained in more detail, below.

### Inboard Section

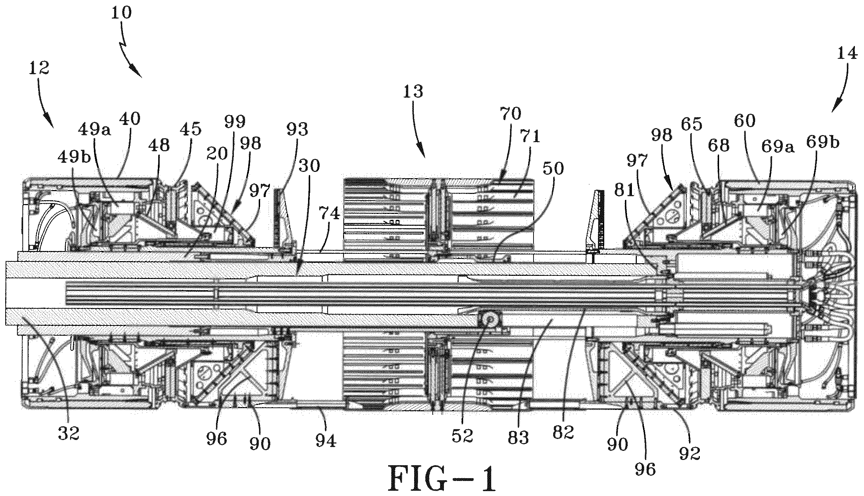

As shown more particularly in Figure 1 the inboard section 12 of the drum is located on the inboard end of the drum and is axially fixed in location. The inboard section includes a cylindrically shaped main spindle 20 which functions to rotate the entire drum assembly 10. The main spindle is rotationally driven by a drive mechanism coupled to the main spindle of a turret via bearings (not shown). An inboard bead lock and turn-up unit 40 is mounted on the spindle 20 and is locked with a key so that the turn up unit rotates in unison with the spindle. The inboard bead lock and turn-up unit 40 is also axially fixed. The main spindle 20 supports an internally mounted sliding shaft 32 that is slidable in the axial direction in order to change the width of the drum. The main spindle is connected to the sliding shaft 32 by a splined hub (not shown) which allows the sliding shaft to rotate with the spindle, and also to axially move.

### Center Section

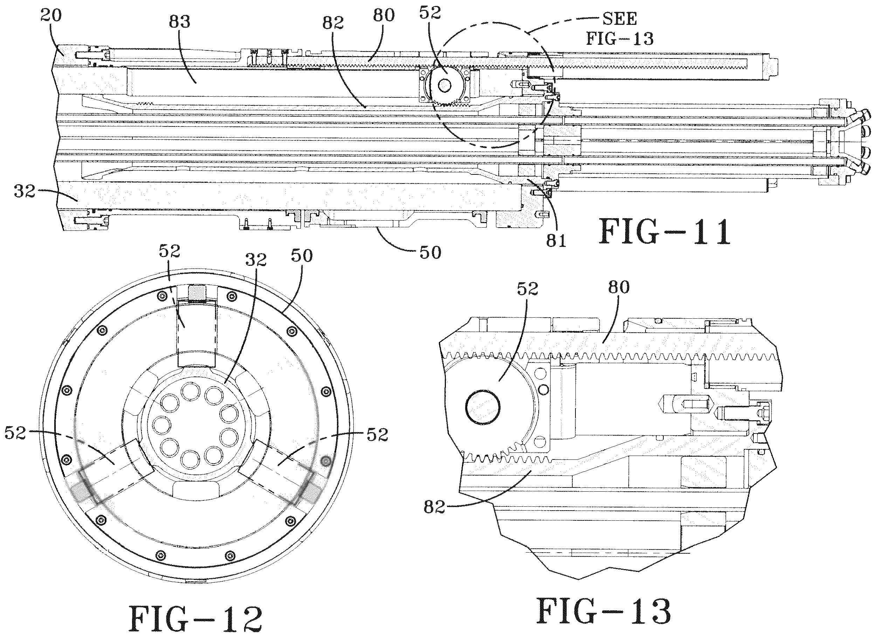

The middle section 13 of the drum 10 includes a center deck hub 50 mounted on the sliding shaft 32. The middle section 13 is secured to the center deck hub by a two section ring (not shown). As shown in Figures 11-13, the center deck hub 50 is secured to the sliding shaft 32 by rotatable pinion gear assemblies 52 and a moveable rack 82, and keys fitted to slot in the moveable shaft (not shown). The center deck hub moves half the axial distance that the sliding shaft moves, when the drum expands or contracts in the axial direction. The center deck hub also rotates with the sliding shaft. The center deck hub has at least two, preferably three rotatable pinion gears 52 which engage a fixed rack 80 and a movable rack 82. The fixed rack is rigidly connected to the main spindle, so that the fixed rack spins with rotation of the spindle, although the fixed rack does not move axially. The fixed rack 80 is mounted over the outer surface of the sliding shaft 32. A moving rack 82 is mounted internal to the sliding shaft. The moving rack has one end 81 affixed internally to the outboard unit 60, so that axial movement of the moving rack 82 also moves the outboard unit. The hub pinion gears 52 are mounted for mechanical engagement with the fixed rack 80 and the moving rack 82. The sliding shaft has slots 83 to allow communication between the pinion gears, fixed rack, and moving rack 82. The one or more pinion gears 52, preferably two or more, are mounted to the center hub 50. A cross-sectional view of the center deck hub 50 also known as sliding hub is shown in figure 12. The one or more pinion gears 52 have teeth that mesh with mating teeth on the fixed rack and the movable rack. When the one or more pinion gear rotate, the pinion teeth engage the teeth of the movable rack 82 mounted in the sliding shaft 32, and also engage the fixed rack 80. Depending on the direction of rotation of the pinion gears with respect to the fixed rack, this rotation causes the sliding hub 50 to slide axially inboard or outboard depending upon the direction of rotation. The moveable shaft 32 is axially relocated by an external yolk and ball screw assembly (not shown).

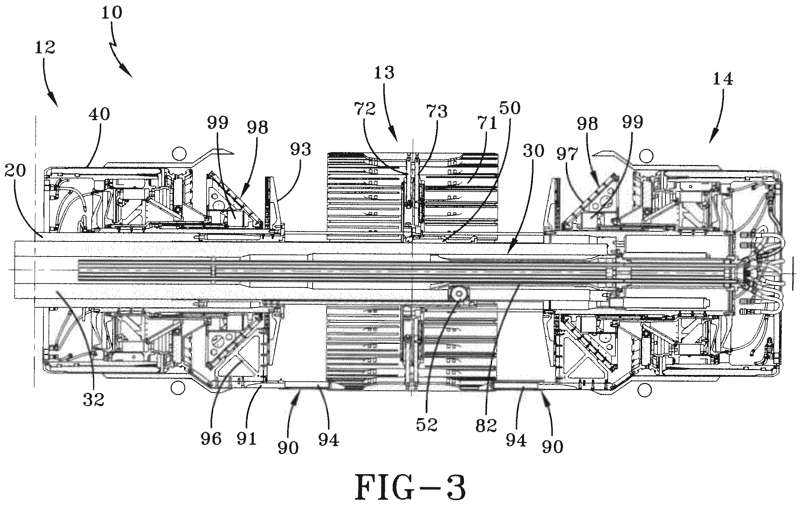

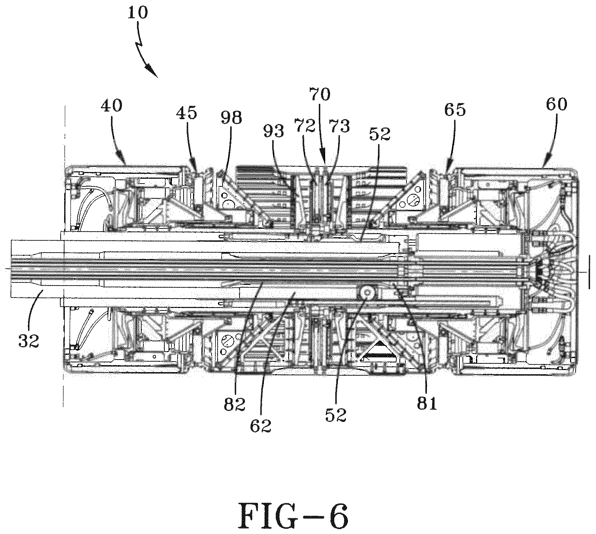

The drums rack and pinion device 32, 80, 82, 52 offsets the axial movement of the sliding shaft. This rack and pinion device allows the center deck unit to stay centered on the drum. The moveable shaft 32 when relocated 1 unit of measure causes the central sliding hub 50 to relocate ½ unit of measure in the same direction. For example, if the outboard bead lock and turn-up unit 60 is moving axially 100 mm towards the inboard end (drum width decreased by 100mm), the center section has to move only 50 mm in the same direction, to re-center the drum. Thus comparing Figure 3 with the drum in the axially expanded position with the axially collapsed drum of Figure 6, it is apparent that the inboard unit has remained axially fixed. It is also apparent that the center deck section has axially moved into abutment with the inboard unit. The sliding shaft has moved axially inward, bringing the outboard end into abutment with the center deck. The outboard end has moved twice the distance of the center section. Thus as the pinion gears rotate, the outboard end moves in two axial units while the center hub section moves one axial unit in the same direction.

### Center Section

Mounted to the center deck hub 50 is a center deck unit 70 which contributes to forming the middle section of the tire building drum. The center deck unit 70 extends between the inboard and outboard Units 40, 60, in order to have a flat drum surface when applying the different components. The center deck unit includes a plurality of tiles 71 which overlap with the tiles of the inboard & outboard unit. The tiles 71 are mounted on two guide rods 72, 73 which are mounted within radially oriented channels 74, 75 of the center deck unit 70. A cam follower bearing 77 is mounted to each outboard guide rod 73. A timing ring 78 is mounted adjacent the outboard side of the main disk, and includes a plurality of timing slots 79. The cam follower bearing 77 is mounted for sliding in each timing slot 79, so that when the guide rods are actuated radially outward by air pistons (not shown), the timing ring ensures that the outboard guide rods 73 all move together.

The center guide rods 72, 73, one pair, (not shown) have one unique set of internal drillings and external connections to create a vacuum chamber on one of the central tiles 71. This vacuum chamber on the surface of a tile 71 is used for the application of the inner liner gum material.

### Inboard and Outboard bead lock and turn up unit

The inboard bead lock and turn up unit is mounted upon the main spindle. The inboard and outboard units 40, 60 are the same, except for the internal drum hub. Each unit has a bead locking mechanism, formed of a plurality of radially expanding bead locks 45, 65. The bead locks 45, 65 are radially expandable by means of a conical actuator 48, 68 and actuated radially outwards by pneumatic circumferential cylinder 49b, 69b, and actuated radially inward by cylinders 49a and 69a.

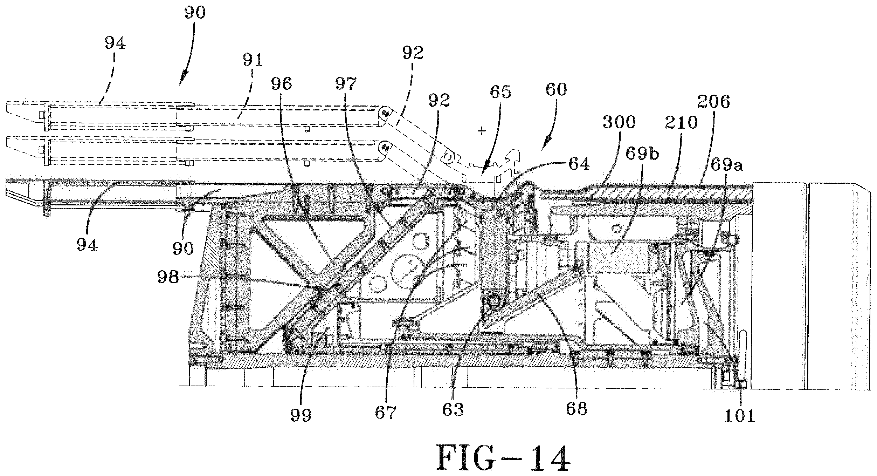

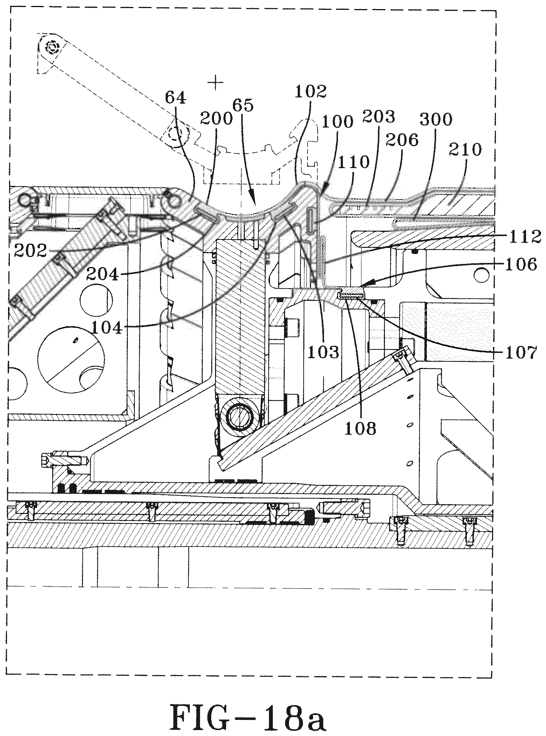

As shown in Figures 14 and 18a, the bead locks have a curved bead seat 64 for receiving the beads. A first end 102 of a sealing membrane 100 is mounted on the surface of the curved bead seat 64. The sealing membrane 100 is preferably annular. The sealing membrane 100 is a highly specialized sealing membrane that extends from the bead locks to the drum body and functions to maintain the carcass inflation and to prevent carcass shaping air from entering the bladder inflation system. The first end 102 has an enlarged foot 103 which is received within a mating receptacle 104 on the bead seat 64. The membrane 100 has a second end 106 having a second enlarged foot 107 that is received in a mating receptacle 108 on an interior portion of the bead lock and turn up unit, adjacent the bead locks. The membrane comprises a third foot 110 which is received in a mating receptacle on the radial oriented surface of the bead lock. It is preferred that the enlarged feet 103, 107, 110 are reinforced with one or more layers of reinforcement, preferably steel ply. The membrane further comprises an expansion portion 112 wherein the membrane has one or more folds stacked adjacent each other to allow the membrane to expand radially and circumferentially when the bead locks are actuated. The sealing membrane 100 is made of rubber reinforced with textile plies from the first end to the second end. The expansion portion 112 of the sealing membrane further comprises one or more layers of steel ply that functions like a spring to snap back into place upon contraction of the sealing membrane during movement of the bead locks.

As shown in Figures 14 and 18a, a climbing bladder 206 is positioned over a portion of the sealing membrane 100. The climbing bladder has a first end 202 having a heel 204 which is mounted in the bead seat 64. The heel 204 is preferably reinforced with one or more layers of reinforcement, preferably steel reinforcement. The climbing bladder 200 extends across the bead seat 64 over a portion of the sealing membrane, and then further extends in an axial direction along the upper surface of the tire building drum. The climbing bladder has a second end 207 that is wrapped around the first end or nose 208 of a support beam 210. The climbing bladder is preferably made of reinforced ply, preferably reinforced with textiles arranged in a cross angle ply, + 10 degrees, - 10 degrees.

The support beam 210 facilitates the radial climb of the climbing bladder 200 during inflation for turnup of the ply. The support beam is formed of reinforced elastomer or rubber, preferably with one or more layers of steel reinforcement ply. At least two layers of crossed steel plies are preferred, with the steel reinforcements preferably crossed at a low angle, in the range of +/- 5 to 30 degrees, more preferably +/- 5-12 degrees. The second end of the support beam is mounted within a support collar 214. The second end is preferably angled to facilitate the folding of the climber bladder over the surface of the support beam. The first end or nose of the support beam has a substantially reduced cross-sectional area, preferably with a stepped profile 209. It is preferred that the cross-sectional area of the nose is in the range of about 30% to 60%, more preferably 40-60%, of the support beam cross sectional area. The reduced cross-sectional area of the support beam allows the nose to bend, facilitating the outward radial movement of the climbing bladder. The nose 208 of the support beam may further optionally comprise serrations or cuts 203 on the outer radial surface to further facilitate bending of the nose of the support beam. The cuts on the nose 208 facilitate the nose bending radially inward prior to turnup, and to facilitate the nose bending radially upward during turnup. This bending of the nose of the support beam solves the problem of wrinkling or folds in the chipper and chafer tire components. The low profile nose that can bend or yield allows the chipper and chafer reduces the tendency of the chipper and chafer ends to stretch into a conical shape due to engagement with a high profile nose during inflation of the bladders and turnup. If the chipper and chafer ends are stretched past their yield point during turnup, they will not return back to their original shape, resulting in nonuniformity. The low profile nose allows the chipper/chafer to not be stretched beyond yield, resulting in the chipper chafer remaining wrinkle free.

The support beam 210 pivots about the support collar 214 due to actuation of a inflatable pusher 300. In the vicinity of the support collar 214, the support beam 210 has a tapered surface 215 that facilitates proper folding of the climbing bladder 206 thereon. The inflatable pusher 300 is located radially inward of the support beam and when inflated, causes the support beam to pivot about its second end, driving the first end 208 radially outward. During inflation of the climbing bladder, the nose 208 of the support beam 210 raises the second end 207 of the climbing bladder radially outward of the first end, to facilitate turnup of the ply. The climbing bladder is also inflated, so that the midportion 211 of the climbing bladder exerts a tremendous force to turn up the ply around the bead. The support beam facilitates the climbing bladder by raising up the outer lateral end of the climbing bladder in the radial direction. The bending backwards of the nose (about an axis perpendicular to the longitudinal axis of the beam) further contributes to the radial extension of the climbing bladder to facilitate turnup.

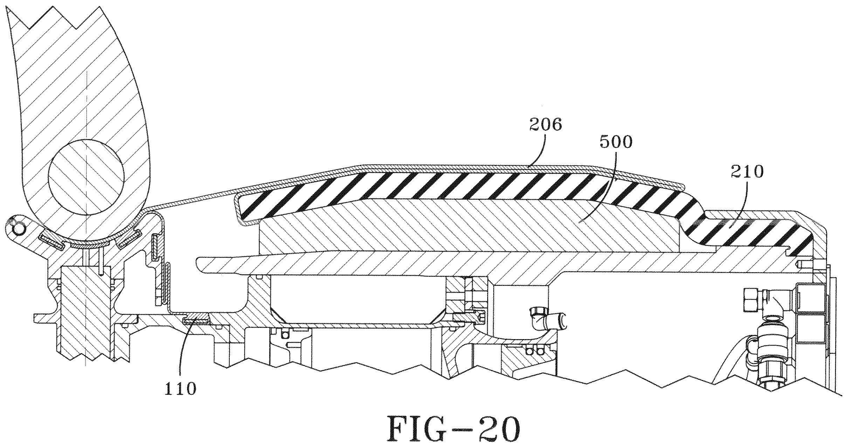

The inflatable pusher 300 can be replaced with a mechanical deck which raises and lowers to engage and lift the support beam, as shown in Figure 20. The mechanical deck 500 may be made of metal and is pneumatically actuated to extend from the interior of the tire drum to actuate the support beam. The mechanical deck 500 is shaped like a fat tubular member having a first end and a second end, wherein the deck can be optionally tapered on a second end.

As shown in Figure 14, the inboard and outboard drum units each comprise a plurality of telescoping tiles 90 which have a fixed portion 91 and a telescopic portion 94. Each individual tile 90 is linked to the bead locks by means of a link lever 92. The link lever 92 ensures the constant material length on the drum, from bead to bead, during the whole building sequence. Each tile 90 is axially extendable with a telescopic portion 94 that allows the decks to cover the full drum width variation and range. The telescopic portion 94 is slidable on over the top of the fixed tiles 91, and extended automatically by internal springs (not shown), inside the guiding unit.

For the full crown position, the tiles unit have a radial expander 96 that is actuated by a conical actuator 98. The conical actuator axially slides inward towards the center section upon actuation by air chamber 99 and air chamber 101 until the actuator engages mechanical stop (not shown) which attaches to the rear head of chamber 69a and stops on the rear head of chamber 101. As the conical actuator slides axially inward, the radial expander 96 slides on angled guide rails 97 located on the outer surface of the conical actuator. As the conical actuator slides axially inward towards the center section, the radial expander moves radially outward in order to expand the tiles in the full radial crown.

As the tiles 90 are linked to the bead lock segments 65 with the link levers 92, the bead locks are allowed to move axially inward because of the air chamber 101. When the bead lock chamber 69a is under pressure, the bead locks are expanding, releasing the link levers and allowing the tiles to expand with the bead lock strokes.

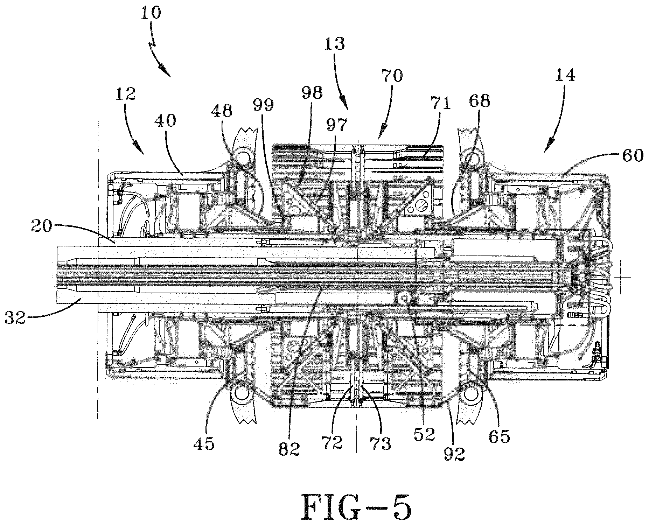

When the tire drum is in its axially collapsed position as shown in Figure 5, the telescoping tiles 90 are fully retracted and are located underneath the tiles 71 of the center deck. Furthermore, the portions of the inboard unit and the outboard unit that are located axially inward (relative to the center section) of the bead locks are positioned inside of the center section tiles 71.

The sequence of building an exemplary tire utilizing the drum of the present invention is explained below. The tire drum as described below, can build a very large size tire on a full stage tire building drum. The drum can be adjusted for building a tire in a negative or positive crown position as desired. The axial drum motion, radial drum motion and bead lock motions and drum rotation are independently set, and adjustable. The tire building can be operated in a fully automated manner or in a manual mode to allow an operator to apply the tire building components to the drum. The components to be applied to the drum can be varied for a particular tire construction and are mentioned below to explain the operation of the drum. First, the drum is set to the start position as shown in Figure 1. In the drum start position, the drum is in its axially expanded form with the drum having its maximum axial width, and minimum radial dimension. However, the start axial width may vary depending upon the tire size. The center section 70 and the outer sections 40, 60 are in their radially innermost positions, and the bead locks in the radially unexpanded position. Next, the tire components such as the inner liner, squeegee, chafer, insert pad, chipper, gum strips. Each of the tire building components is typically applied separately by a server as the drum is rotated by the spindle 20.

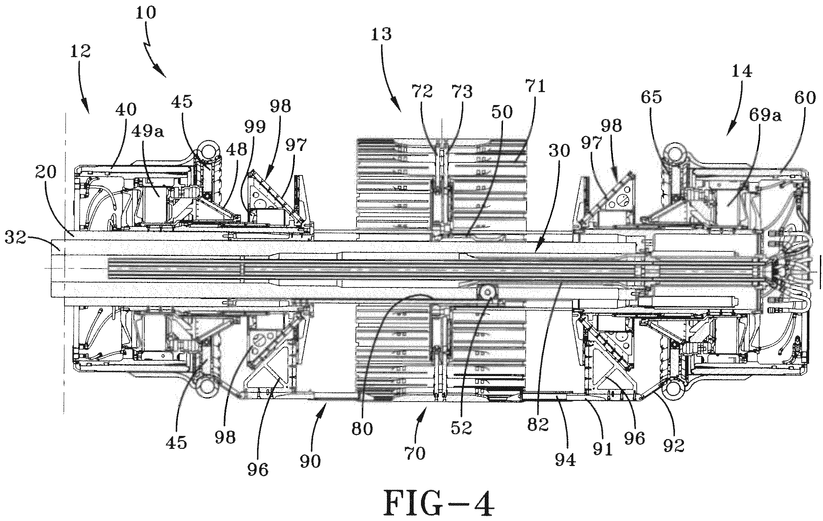

Next, the center section of the drum is radially expanded into a crowning position as shown in Figure 3. The center section tiles 71 are radially expanded by actuation of the guide rods 72, 73, and the motion provided by chamber 101. After the center section is radially expanded, the ply is applied to the crowned drum. Next, the beads are positioned by a bead loader over the bead locks 45, 65. An apex is then applied to the beads and or drum. Alternatively, a bead apex subassembly may be used in place of the separate components. The bead locks are radially expanded to clamp the beads as shown in Fig 4 by actuation of a conical actuator 48, 68 driven by pneumatic circumferential cylinders 49B, 69B. As the bead locks clamp the bead, the tiles 71 of the center section and the telescoping tiles are further expanded radially by actuation of the guide rods 72, 73 and actuation of the conical actuator to slide the radial expander, respectively. Additional tire components may then be applied such as gum strips and wedges.

Next, as the center of the drum remains in the high crown position, the center section 70 and the outboard section 60 are moved in an axially inward direction towards the inboard section 40 as shown in Figure 5. The inboard section does not move axially during the drum operation. The center section 70 is mounted on a hub 50 secured to the axially sliding shaft 32. The hub's pinion gears 52 engage the movable rack 82 which is attached to the sliding shaft, causing the movable rack and sliding shaft to move axially inboard or towards the inboard section. The center section also moves toward the inboard section by the rotation of the pinion gears on the fixed rack 80. The axial movement of the center section is half the movement of the outboard section due to the gear ratios of the fixed rack and the movable rack. When the tire drum is in its axially collapsed position as shown in Figure 5, the telescoping tiles 90 are fully retracted and are located underneath the tiles 71 of the center deck. Furthermore, the conical actuator 98 and radial expander 96 of the inboard unit and the outboard unit are positioned inside of the center section tiles 70.

When the drum is in the crowned and axially collapsed position as shown in Figure 5, the carcass is inflated. Next the ply is turned up by actuating the climbing bladder. The climbing bladder is actuated by the inflatable pusher.

The bladders roll the carcass ply turnups and the sidewalls, if they have been previously attached, over onto the center section and carcass ply. Once the tire turnup ends are folded over, tire components such as the sidewall, tread base, tread cap, belt package can be applied. Next the bead lock is actuated to the unlocked position, the tire carcass is deflated, and the center section is moved radially inward to allow removal of the green tire.

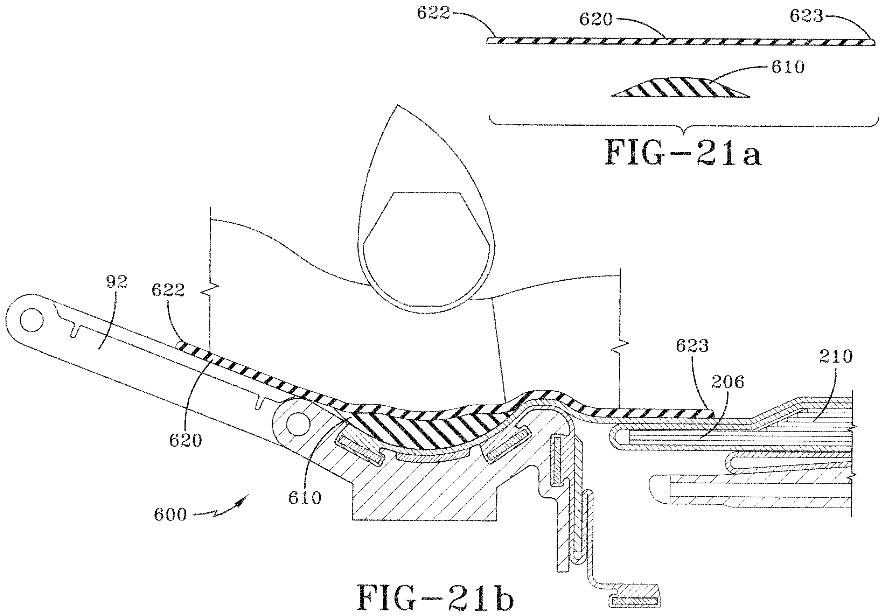

Figures 21 a and 21 b pertain to a second embodiment of the bead lock mechanism of the invention. As shown in Figure 21b, the bead seat 600 may further optionally comprise a first and second molded member 610, 620. The first molded member 610 is preferably made of highly elastic silicone or silicone rubber mixture, that if molded in the shape of a trapezoid as shown in Figure 21 a. When the trapezoid is mounted in the curved bead seat, the first molded member changes shape into a curved piece that resembles a lower lip. The second member 620 is layered over the first member, and also preferably comprises a high elasticity silicone or silicone rubber mixture. The second member 620 has a first end 622 that extends over the linkage 92. The second member has a second end 623 that overlaps with the nose 206 of the support beam 210. The first and second member function to distribute the pressure load of the bead member during compression of the beads with the bead lock mechanism.

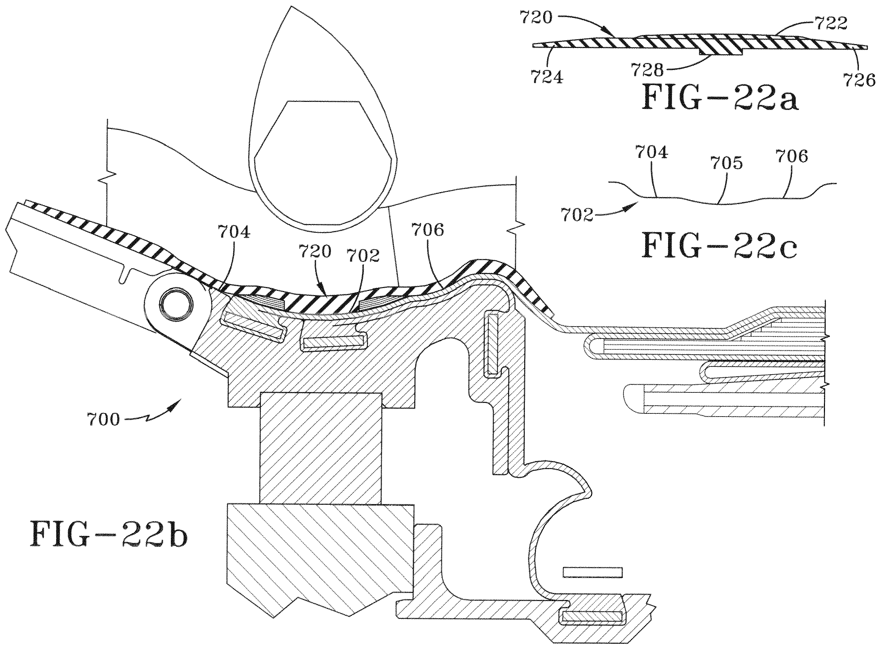

Figures 22a-c pertain to a third embodiment of the bead lock mechanism of the invention. As shown in Figure 22b, the bead seat 700 may further optionally comprise a first and second molded member 720, 722. In this embodiment, the outer surface 702 of the bead lock has been revised. The outer surface has a first region that is located directly under the bead when the beads are locked. The first region 705 is almost flat, and has a very large radius curve in the range of about 60 to 150 degrees, more preferably 80 to 110 degrees. The first region has a second and third region 704, 706 located adjacent to, and on either side of the first region. The axially outer second region 706 has a substantially smaller radius, and is in the range of about 30 to 60 degrees, more preferably about 40-50 degrees. The axially inner third region 704 located on the other side and adjacent to the first region is substantially flat. A first and second elastic member 720, 722 is received in the bead seat 700. The first elastic member 720 is preferably made of highly elastic silicone or silicone rubber mixture, that is molded in the desired shape. The shape of the elastic member 720 is an elongated strip with two opposed tapered ends 724, 726, as shown in Figure 22a. The bottom of the strip has a enlarged projection 728 that is positioned under the bead when seated. The second member 722 is layered over the first member, and also preferably comprises a high elasticity silicone or silicone rubber mixture. The second member has a length sufficient to extend across the bead lock surface. The first and second member function to distribute the pressure load of the bead member during compression of the beads with the bead lock mechanism.

## Claims

1. A tire building drum comprising an inboard section (12), a center section (13) and an outboard section (14), the inboard section having a rotating spindle (20) and a sliding shaft (32), wherein the sliding shaft (32) is slidable within the spindle (20) and rotationally coupled to the spindle, wherein the inboard section is axially fixed, wherein the inboard section has a radially expandable bead lock device (40) mounted on the spindle (20), wherein the center section has a hub (50) affixed to the sliding shaft, the hub having one or more pinion gears (52) for engaging a fixed rack (80) and a moving rack (82), wherein the moving rack is located inside of the sliding shaft, wherein the drum (10) is configured such that a rotation of the pinion gears can axially slide the shaft inboard and outboard, and wherein the fixed rack is connected to the spindle.

2. The tire building drum of claim 1 wherein the fixed rack (80) is located between the hub (50) and the sliding shaft (32).

3. The tire building drum of claim 1 or 2 wherein the axial travel of the outboard section (14) of the drum (10) is greater, optionally twice as great or 1.5 times as great, than the axial travel of the center section (13) for a single rotation of the pinion gears (52).

4. The tire building drum of at least one of the previous claims wherein the inboard section (12) and the outboard section (14) each comprise a plurality of telescoping tiles (90) and, optionally, wherein each telescoping tile is radially expandable.

5. The tire building drum of claim 4 wherein each telescoping tile (90) has a fixed portion (91) and an axially extending portion (94) and, optionally, wherein the axially extending portion (94) of the telescoping tiles (90) overlap with a corresponding tile mounted on the center section (13).

6. A tire building drum comprising an inboard section (12), a center section (13) and an outboard section (14), the inboard section having a rotating spindle (20) and a sliding shaft (32), wherein the sliding shaft is slidable within the spindle and rotationally coupled to the spindle, wherein the inboard section is axially fixed, wherein the inboard section and the outboard section each have a fixed tile deck and a telescoping tile deck, wherein the center section (13) is mounted on the sliding shaft (32) and further comprises a center deck having a plurality of radially expandable tiles, wherein the outboard section (14) of the drum (10) is mounted on a distal end of the sliding shaft (32), wherein the drum is axially movable by sliding of the sliding shaft, wherein the center section tile deck has the largest diameter, and wherein each telescoping tile deck has a diameter less than the diameter of the center section tile deck.

7. The tire building drum of claim 6 wherein the fixed tile deck has a diameter less than the telescoping tile deck diameter.

8. The tire building drum of claims 1 or 6 further comprising a sealing membrane, wherein the sealing membrane (100) has a first end (102) mounted on the bead saddle (64) of a bead lock, and a second end (106) mounted on an interior portion of the drum (10), wherein the sealing membrane (100) has an expansion portion (112), preferably an expansion portion made of steel and/or having one or more folds.

9. The tire building drum of claims 1 or 6 further comprising a climbing bladder (206) or a mechanical deck, wherein the climbing bladder or the mechanical deck has a first end (202) mounted on the bead saddle of the bead lock and a second end (207) mounted to a support beam (210), preferably a support beam pivotable about its end and made of reinforced rubber.

10. The tire building drum of claim 9 wherein an inflatable pusher (300) engages the support beam (210) when inflated, causing the support beam to pivot about its second end, raising the second end of the climbing bladder (206) radially outward.

11. A method of building a tire on a tire building drum, the method comprising the steps of:
applying one or more tire building components onto a drum (10) to form a tire carcass having carcass ends, the drum having an inboard section (12), a center section (13) and an outboard section (14), the inboard section having a rotating spindle (20) and a sliding shaft (32), wherein the sliding shaft is slidable within the spindle, wherein the inboard section has a radially expandable bead lock (40) within the drum half mounted on the spindle, wherein the center section has a hub (50) mounted on the sliding shaft and comprises a plurality of tiles that are radially expandable, wherein the outboard section of the drum is mounted on a distal end of the sliding shaft (32), wherein the outboard section (14) further has a radially expandable bead lock (60) within the drum half, and wherein the outboard section is axially movable by sliding of the sliding shaft (32);
placing a first and second bead around the tire carcass on the drum (10) so that the carcass ends of the tire carcass extend laterally outward of the beads;
radially expanding the first and second bead locks into engagement with the first and second bead,
expanding the carcass located between the bead locks radially outward by radially expanding a center section (13) of the tire building drum (10) while moving the crowning levers and while moving drum half which contains the bead lock on the outboard section (14) axially inward towards the inboard section (12), wherein the step of moving the drum half which contains the bead lock axially inward occurs by rotating a pinion gear (52) mounted in a hub (50) affixed to the center section (13) and the sliding shaft (32), while said pinion gear (52) engages a moving rack inside the sliding shaft and affixed to the outboard section, so that rotation of the pinion gear slides the moving rack and the outboard section in an axial direction.

12. The method of claim 11 further comprising the step of axially moving the center section (13) of the drum (10) by axial movement of the hub (50).

13. The method of claim 11 or 12 wherein one or more pinion gears (52) are mounted between the hub (50) and the sliding shaft (32), wherein the one or more pinion gears (52) are positioned to engage a fixed rack connected to the spindle (20), and a moving rack connected to the sliding shaft (32), wherein axial movement of the sliding shaft rotates the one or more pinion gears (52) so that the hub (50) slides axially.

14. The method of at least one of the claims 11 to 13 wherein the fixed rack is connected to the spindle (20), and/or wherein the fixed rack is located between the hub (50) and the sliding shaft (32).

15. The method of at least one of the claims 11 to 14 wherein the axial travel of the outboard section (14) of the drum (10) is greater than or twice as great as the axial travel of the center section (13) for a single rotation of the pinion gears (52).

## Patentansprüche

1. Reifenbautrommel, umfassend einen inneren Abschnitt (12), einen mittleren Abschnitt (13) und einen äußeren Abschnitt (14), wobei der innere Abschnitt eine rotierende Spindel (20) und eine Schiebewelle (32) aufweist, wobei die Schiebewelle (32) in der Spindel (20) verschiebbar ist und rotatorisch an die Spindel gekoppelt ist, wobei der innere Abschnitt axial fixiert ist, wobei der innere Abschnitt eine an der Spindel (20) montierte radial expandierbare Wulstriegelvorrichtung (40) aufweist, wobei der mittlere Abschnitt eine an der Schiebewelle befestigte Nabe (50) aufweist, wobei die Nabe ein oder mehrere Ritzelzahnräder (52) zum Eingreifen an einer feststehenden Zahnstange (80) und einer bewegenden Zahnstange (82) aufweist, wobei die bewegende Zahnstange sich innerhalb der Schiebewelle befindet, wobei die Trommel (10) so eingerichtet ist, dass eine Rotation der Ritzelzahnräder die Welle axial nach innen und nach außen verschieben kann, und wobei die feststehende Zahnstange mit der Spindel verbunden ist.

2. Reifenbautrommel nach Anspruch 1, wobei die feststehende Zahnstange (80) sich zwischen der Nabe (50) und der Schiebewelle (32) befindet.

3. Reifenbautrommel nach Anspruch 1 oder 2, wobei der axiale Verfahrweg des äußeren Abschnitts (14) der Trommel (10) größer, optional zweimal so groß oder 1,5 mal so groß, als der axiale Verfahrweg des mittleren Abschnitts (13) für eine einzige Rotation der Ritzelzahnräder (52) ist.

4. Reifenbautrommel nach mindestens einem der vorhergehenden Ansprüche, wobei der innere Abschnitt (12) und der äußere Abschnitt (14) jeder eine Vielzahl von Teleskopplatten (90) umfassen und, optional, wobei jede Teleskopplatte radial expandierbar ist.

5. Reifenbautrommel nach Anspruch 4, wobei jede Teleskopplatte (90) einen feststehenden Teil (91) und einen sich axial erstreckenden Teil (94) aufweist, und, optional, wobei der sich axial erstreckende Teil (94) der Teleskopplatten (90) sich mit einer entsprechenden, an dem mittleren Abschnitt (13) montierten Platte überlappt.

6. Reifenbautrommel, umfassend einen inneren Abschnitt (12), einen mittleren Abschnitt (13) und einen äußeren Abschnitt (14), wobei der innere Abschnitt eine rotierende Spindel (20) und eine Schiebewelle (32) aufweist, wobei die Schiebewelle in der Spindel verschiebbar ist und rotatorisch an die Spindel gekoppelt ist, wobei der innere Abschnitt axial fixiert ist, wobei der innere Abschnitt und der äußere Abschnitt jeder ein feststehendes Plattendeck und ein Teleskop-Plattendeck aufweisen, wobei der mittlere Abschnitt (13) an der Schiebewelle (32) montiert ist und weiter ein mittleres Deck mit einer Vielzahl von radial expandierbaren Platten umfasst, wobei der äußere Abschnitt (14) der Trommel (10) an einem distalen Ende der Schiebewelle (32) montiert ist, wobei die Trommel durch Verschieben der Schiebewelle axial bewegbar ist, wobei das Plattendeck des mittleren Abschnitts den größten Durchmesser hat, und wobei jedes Teleskop-Plattendeck einen Durchmesser aufweist, der kleiner als der Durchmesser des Plattendecks des mittleren Abschnitts ist.

7. Reifenbautrommel nach Anspruch 6, wobei das feststehende Plattendeck einen Durchmesser aufweist, der kleiner als der Durchmesser des Teleskop-Plattendecks ist.

8. Reifenbautrommel nach Ansprüchen 1 oder 6, weiter eine Dichtungsmembran umfassend, wobei die Dichtungsmembran (100) ein an dem Wulstsattel (64) eines Wulstriegels montiertes erstes Ende (102) und ein an einem inneren Teil der Trommel (10) montiertes zweites Ende (106) aufweist, wobei die Dichtungsmembran (100) einen Expansionsteil (112) aufweist, bevorzugt einen Expansionsteil, der aus Stahl besteht und/oder eine oder mehrere Falten aufweist.

9. Reifenbautrommel nach Ansprüchen 1 oder 6, weiter einen steigenden Heizbalg (206) oder ein mechanisches Deck umfassend, wobei der steigende Heizbalg oder das mechanische Deck ein an dem Wulstsattel des Wulstriegels montiertes erstes Ende (202) und ein an einem Stützträger (210) montiertes zweites Ende (207) aufweist, bevorzugt einem Stützträger, der um sein Ende schwenkbar ist und aus verstärktem Gummi besteht.

10. Reifenbautrommel nach Anspruch 9, wobei ein aufblasbarer Stößel (300) an dem Stützträger (210) angreift, wenn er aufgeblasen ist, wodurch er den Stützträger veranlasst, um sein zweites Ende zu schwenken, wodurch das zweite Ende des steigenden Heizbalgs (206) radial auswärts angehoben wird.

11. Verfahren zum Bauen eines Reifens auf einer Reifenbautrommel, wobei das Verfahren die Schritte umfasst des:
Anbringens eines oder mehrerer Reifenbauteile auf einer Trommel (10), um eine Reifenkarkasse mit Karkassenenden zu bilden, wobei die Trommel einen inneren Abschnitt (12), einen mittleren Abschnitt (13) und einen äußeren Abschnitt (14) aufweist, wobei der innere Abschnitt eine rotierende Spindel (20) und eine Schiebewelle (32) aufweist, wobei die Schiebewelle innerhalb der Spindel verschiebbar ist, wobei der innere Abschnitt einen radial expandierbaren Wulstriegel (40) in der an der Spindel montierten Trommelhälfte aufweist, wobei der mittlere Abschnitt (13) eine an der Schiebewelle montierte Nabe (50) aufweist und eine Vielzahl von Platten umfasst, die radial expandierbar sind, wobei der äußere Abschnitt der Trommel an einem distalen Ende der Schiebewelle (32) montiert ist, wobei der äußere Abschnitt (14) weiter einen radial expandierbaren Wulstriegel (60) in der Trommelhälfte aufweist, und wobei der äußere Abschnitt durch Verschieben der Schiebewelle (32) axial bewegbar ist;
Platzierens eines ersten und eines zweiten Wulsts um die Reifenkarkasse auf der Trommel (10), sodass die Karkassenenden der Reifenkarkasse sich seitlich auswärts von den Wülsten erstrecken;
radial Expandierens des ersten und des zweiten Wulstriegels in Eingriff mit dem ersten und zweiten Wulst,
Expandierens der zwischen den Wulstriegeln befindlichen Karkasse radial auswärts durch radial Expandieren eines mittleren Abschnitts (13) der Reifenbautrommel (10), während die Zenitformungshebel bewegt werden und während die Trommelhälfte, die den Wulstriegel enthält, an dem äußeren Abschnitt (14) axial einwärts hin zu dem inneren Abschnitt (12) bewegt wird, wobei der Schritt des axial einwärts Bewegens der Trommelhälfte, die den Wulstriegel enthält, durch Rotieren eines Ritzelzahnrads (52) geschieht, das in einer an dem mittleren Abschnitt (13) und der Schiebewelle (32) befestigten Nabe (50) montiert ist, während das Ritzelzahnrad (52) an einer bewegenden Zahnstange, die sich in der Schiebewelle befindet und an dem äußeren Abschnitt befestigt ist, angreift, sodass Rotation des Ritzelzahnrads die bewegende Zahnstange und den äußeren Abschnitt in einer axialen Richtung verschiebt.

12. Verfahren nach Anspruch 11, weiter den Schritt des axial Bewegens des mittleren Abschnitts (13) der Trommel (10) durch axiale Bewegung der Nabe (50) umfassend.

13. Verfahren nach Anspruch 11 oder 12, wobei ein oder mehrere Ritzelzahnräder (52) zwischen der Nabe (50) und der Schiebewelle (32) montiert sind, wobei das eine oder die mehreren Ritzelzahnräder (52) so positioniert sind, dass sie an einer mit der Spindel (20) verbundenen feststehenden Zahnstange und einer mit der Schiebewelle (32) verbundenen bewegenden Zahnstange angreifen, wobei axiale Bewegung der Schiebewelle das eine oder die mehreren Ritzelzahnräder (52) rotiert, sodass die Nabe (50) sich axial verschiebt.

14. Verfahren nach mindestens einem der Ansprüche 11 bis 13, wobei die feststehende Zahnstange mit der Spindel (20) verbunden ist, und/oder wobei die feststehende Zahnstange sich zwischen der Nabe (50) und der Schiebewelle (32) befindet.

15. Verfahren nach mindestens einem der Ansprüche 11 bis 14, wobei der axiale Verfahrweg des äußeren Abschnitts (14) der Trommel (10) größer als oder zweimal so groß wie der axiale Verfahrweg des mittleren Abschnitts (13) für eine einzige Rotation der Ritzelzahnräder (52) ist.

## Revendications

1. Tambour de confection de bandage pneumatique comprenant un tronçon interne (12), un tronçon central (13) et un tronçon externe (14), le tronçon interne possédant une broche rotative (20) et un arbre coulissant (32), dans lequel l'arbre coulissant (32) est à même de coulisser au sein de la broche (20) et est couplé en rotation à la broche, dans lequel le tronçon interne est fixe en direction axiale, dans lequel le tronçon interne possède un dispositif de verrouillage de talon (40) apte à se déployer en direction radiale, monté sur la broche (20), dans lequel le tronçon central possède un moyeu (50) fixé à l'arbre coulissant, le moyeu possédant un ou plusieurs engrenages à pignons (52) destinés à venir s'engrener à une crémaillère fixe (80) et à une crémaillère mobile (82), la crémaillère mobile étant disposée à l'intérieur de l'arbre coulissant, dans lequel le tambour (10) est configuré d'une manière telle qu'une rotation des pignons d'engrenage peut faire coulisser en direction axiale l'arbre à l'intérieur et à l'extérieur, et dans lequel la crémaillère fixe est reliée à la broche.

2. Tambour de confection de bandage pneumatique selon la revendication 1, dans lequel la crémaillère fixe (80) est disposée entre le moyeu (50) et l'arbre coulissant (32).

3. Tambour de confection de bandage pneumatique selon la revendication 1 ou 2, dans lequel la course axiale du tronçon externe (14) du tambour (10) est supérieure, de manière facultative deux fois supérieure ou 1,5 fois supérieure à la course axiale du tronçon central (13) pour une rotation unique des engrenages à pignons (52).

4. Tambour de confection de bandage pneumatique selon au moins une des revendications précédentes, dans lequel le tronçon interne (12) et le tronçon externe (14) comprennent chacun plusieurs plaques télescopiques (90) et de manière facultative dans lequel chaque plaque télescopique est à même de se déployer en direction radiale.

5. Tambour de confection de bandage pneumatique selon la revendication 4, dans lequel chaque plaque télescopique (90) possède une portion fixe (91) et une portion (94) s'étendant en direction axiale et, de manière facultative, dans lequel la portion (94) s'étendant en direction axiale des plaques télescopiques (90) chevauche une plaque correspondante montée sur le tronçon central (13).

6. Tambour de confection de bandage pneumatique comprenant un tronçon interne (12), un tronçon central (13) et un tronçon externe (14), le tronçon interne possédant une broche rotative (20) et un arbre coulissant (32), dans lequel l'arbre coulissant (32) est à même de coulisser au sein de la broche (20) et est couplé en rotation à la broche, dans lequel le tronçon interne est fixe en direction axiale, dans lequel le tronçon interne et le tronçon externe possèdent chacun une plate-forme de plaque fixe et une plate-forme de plaque télescopique, dans lequel le tronçon central (13) est monté sur l'arbre coulissant (32) et comprend en outre une plate-forme centrale possédant plusieurs plaques aptes à se déployer en direction radiale, dans lequel le tronçon externe (14) du tambour (10) est monté sur une extrémité distale de l'arbre coulissant (32), dans lequel le tambour est mobile en direction axiale en faisant coulisser l'arbre coulissant, dans lequel la plate-forme de plaque du tronçon central possède le plus grand diamètre, et dans lequel chaque plate-forme de plaque télescopique possède un diamètre inférieur au diamètre de la plate-forme de plaque du tronçon central.

7. Tambour de confection de bandage pneumatique selon la revendication 6, dans lequel la plate-forme de plaque fixe possède un diamètre inférieur au diamètre de la plate-forme de plaque télescopique.

8. Tambour de confection de bandage pneumatique selon la revendication 1 ou 6, comprenant en outre une membrane d'étanchéité, dans lequel la membrane d'étanchéité (100) possède une première extrémité (102) montée sur la selle de talon (64) d'un verrou de talon, et une deuxième extrémité (106) montée sur une portion interne du tambour (10), la membrane d'étanchéité (100) possédant une portion d'expansion (112) de préférence une portion d'expansion constituée d'acier et/ou possédant un ou plusieurs plis.

9. Tambour de confection de bandage pneumatique selon la revendication 1 ou 6, comprenant en outre une vessie montante (206) ou une plate-forme mécanique, la vessie montante ou la plate-forme mécanique possédant une première extrémité (202) montée sur la selle de talon du verrou de talon et une deuxième extrémité (207) montée sur une poutre de support (210) et de préférence une poutre de support apte à pivoter autour de son extrémité et constituée de caoutchouc renforcé.

10. Tambour de confection de bandage pneumatique selon la revendication 9, dans lequel un pousseur gonflable (300) entre en contact avec la poutre de support (210) à l'état gonflé, faisant en sorte que la poutre de support pivote autour de sa deuxième extrémité en soulevant la deuxième extrémité de la vessie montante (206) vers l'extérieur en direction radiale.

11. Procédé de confection d'un bandage pneumatique sur un tambour de confection de bandage pneumatique, le procédé comprenant les étapes dans lesquelles :
on applique un ou plusieurs composants de confection de bandage pneumatique sur un tambour (10) pour former une carcasse de bandage pneumatique possédant des extrémités de carcasse, le tambour possédant un tronçon interne (12), un tronçon central (13) et un tronçon externe (14), le tronçon interne possédant une broche rotative (20) et un arbre coulissant (32), dans lequel l'arbre coulissant (32) est à même de coulisser au sein de la broche, dans lequel le tronçon interne possède un verrou de talon (40) apte à se déployer en direction radiale au sein de la moitié du tambour montée sur la broche, dans lequel le tronçon central possède un moyeu (50) monté sur l'arbre coulissant et comprend plusieurs plaques qui sont à même de se déployer en direction radiale, dans lequel le tronçon externe du tambour est monté sur une extrémité distale de l'arbre coulissant (32), dans lequel le tronçon externe (14) possède en outre un verrou de talon (60) apte à se déployer en direction radiale au sein de la moitié du tambour, et dans lequel le tronçon externe est mobile en direction axiale via le coulissement de l'arbre coulissant (32) ;
on place un premier et un deuxième talon autour de la carcasse du bandage pneumatique sur le tambour (10) d'une manière telle que les extrémités de la carcasse du bandage pneumatique s'étendent à l'extérieur des talons en direction latérale ;
on déploie en direction radiale le premier et le deuxième verrou de talon pour les amener en contact avec le premier et le deuxième talon ;
on déploie la carcasse disposée entre les verrous de talon en direction radiale vers l'extérieur via le déploiement en direction radiale d'un tronçon central (13) du tambour de confection de bandage pneumatique (10) tout en déplaçant les leviers bombés et tout en déplaçant la moitié de tambour qui contient le verrou de talon sur le tronçon externe (14) en direction radiale vers l'intérieur dans la direction du tronçon interne (12), dans lequel l'étape de déplacement de la moitié du tambour qui contient le verrou de talon en direction axiale vers l'intérieur a lieu en faisant tourner un engrenage à pignons (52) monté dans un moyeu (50) fixé au tronçon central (13) et l'arbre coulissant (32), tandis que l'engrenage à pignons (52) vient s'engrener avec une crémaillère mobile à l'intérieur de l'arbre coulissant et fixée au tronçon externe, d'une manière telle que la rotation de l'engrenage à pignons fait coulisser la crémaillère mobile et le tronçon externe dans une direction axiale.

12. Procédé selon la revendication 11, comprenant en outre l'étape dans laquelle on déplace en direction axiale le tronçon central (13) du tambour (10) via le mouvement axial du moyeu (50).

13. Procédé selon la revendication 11 ou 12, dans lequel un ou plusieurs engrenages à pignons (52) sont montés entre le moyeu (50) et l'arbre coulissant (32), dans lequel lesdits un ou plusieurs engrenages à pignons (52) sont disposés pour venir s'engrener avec une crémaillère fixe reliée à la broche (20) et avec une crémaillère mobile reliée à l'arbre coulissant (32), dans lequel un mouvement axial de l'arbre coulissant fait tourner ledit un ou plusieurs engrenages à pignons (52) d'une manière telle que le moyeu (50) coulisse en direction axiale.

14. Procédé selon au moins une des revendications 11 à 13, dans lequel la crémaillère fixe est reliée à la broche (20) et/ou dans lequel la crémaillère fixe est disposée entre le moyeu (50) et l'arbre coulissant (32).

15. Procédé selon au moins une des revendications 11 à 14, dans lequel la course axiale du tronçon externe (14) du tambour (10) est supérieure ou deux fois supérieure à la course axiale du tronçon central (13) pour une seule rotation des engrenages à pignons (52).
